# EUROPÄISCHE PATENTSCHRIFT

(11) **EP 3 984 721 B1**
(45) Veröffentlichungstag und Bekanntmachung des Hinweises auf die Patenterteilung: **04.12.2024**
(21) Anmeldenummer: 20201987.3
(22) Anmeldetag: 15.10.2020
(51) Int. Cl.: B29C 64/129, B29C 64/277, B33Y 10/00, B33Y 30/00, B33Y 50/02

(54) **VERFAHREN ZUR PROZESSTEUERUNG EINES 3D-STEREOLITHOGRAPHIE-PROZESSES**
METHOD FOR CONTROLLING THE PROCESS OF A STEREOLITHOGRAPHY-3D PROCESS
PROCÉDÉ DE COMMANDE DE PROCESSUS D'UN PROCESSUS DE STEREOLITHOGRAPHIE-3D

(43) Veröffentlichungstag der Anmeldung: 20.04.2022
(73) Patentinhaber: Ivoclar Vivadent AG, 9494 Schaan (LI)
(72) Erfinder: Reissner, Joachim, 6714 Nüziders (AT); Ebert, Jörg, 9470 Buchs (CH); Bonderer, Lorenz Josef, 7320 Sargans (CH)
(74) Vertreter: Baldus, Oliver

(56) Entgegenhaltungen:
- WO-A1-2017/039444
- WO-A1-2018/061993
- WO-A1-2020/069060
- ANONYMOUS: "ISO/ASTM 52900:15 Standard Terminology for Additive Manufacturing - General Principles - Terminology", ISO STANDARD, 1 January 2015 (2015-01-01), pages 947 - 955, XP055374490, Retrieved from the Internet <URL:https://www.astm.org/Standards/ISOASTM52900.htm>

## Beschreibung

Die Erfindung betrifft ein Verfahren zur Prozesssteuerung eines 3D-Druckprozesses, gemäß dem Oberbegriff von Anspruch 1, sowie einen 3D-Drucker mit einer Bauplattform, gemäß dem Oberbegriff von Anspruch 17.

Nach heutigem Stand der Technik werden bei einem derartigen 3D-Druckprozess, der Stereolithographie und/oder einem DLP-Prozess (digitalen Lichtverarbeitungs-Prozess), die Bauteile aus speziellem druckbaren Kunststoff erzeugt, der in flüssiger Form vorliegt und mittels selektiver Belichtung in Schichten, meist mit einer geringen Stärke wie 0,1 oder 0,05 mm, mit Licht beaufschlagt und gehärtet wird.

Typischerweise wird das Licht durch eine transparente Folie hindurch geleitet, und nach Fertigstellung der betreffenden Schicht wird die Folie von dem Bauteil oder das Bauteil von der Folie abgelöst.

In neuerer Zeit ist es bekannt geworden, Stereolithographiegeräte und/oder DLP-Prozesse (digitale Lichtverarbeitungs-Prozesse) für die Dentaltechnik einzusetzen, insbesondere zur Herstellung von Dentalrestaurationsteilen.

Es versteht sich, dass solche Bauteile dann zum einen biokompatibel sein müssen und zum anderen hohe Anforderungen an die Mundverträglichkeit gestellt werden und werden müssen.

Um einen derartigen 3D-Druckprozess zu effizient wie möglich zu gestalten, muss der Fortschritt des Prozesses verfolgt werden. Dies ermöglicht eine minimale Druckdauer bei optimaler Aushärtung und dadurch das beste Kosten/Aufwand zu Nutzen Verhältnis. Eine Überwachung der Oberfläche bei Sinterprozessen feiner Metallpulver durch die Temperaturmessung mit einer Wärmebildkamera ist aus "Layerwise Monitoring of the Selective Laser Melting Process by Thermography" von Krauss *et al.* bekannt.

Ein stereolithographischer Prozess oder ein digitaler Lichtverarbeitungs-Prozess, bei dem ein fotosensitives Material durch Strahlung ausgehärtet wird sowie die Mess-Strahlung in eine Referenzschicht eingekoppelt wird und durch die interne Reflexion zum überwiegenden Teil innerhalb der Referenzschicht bleibt, und die Mess-Strahlung durch einen Sensor orts- sowie zeitaufgelöst erfasst wird, ist aus der WO 2017/106895 A1 bekannt. Hierbei wird mittels eines komplizierten Aufbaus die Strahlung orts- sowie zeitaufgelöst. Dieser Aufbau ist sehr kostenintensiv und somit für die Dentaltechnik ungeeigner. Außerdem ist es bei dieser Lösung nicht möglich, festzustellen, wann der optimale Zeitpunkt ist, die Belichtung zu beenden. Ein weiteres stereolithografisches Verfahren wird in der WO 2020/069060 A1 gezeigt, bei dem die Temperatur eines lichtempfindlichen Materials kontrolliert wird.

Der Erfindung liegt daher die Aufgabe zugrunde, ein einfaches Verfahren zur Prozesssteuerung eines 3D-Druckprozesses gemäß dem Oberbegriff von Anspruch 1 und Anspruch 17 sowie einen 3D-Drucker mit einer Bauplattform nach Anspruch 20 zu schaffen, das/der es ermöglicht, ein bestmögliches Druckergebnis bei minimalem Zeitaufwand zu erreichen.

Gemäß dem erfindungsgemäßen Verfahren zur Prozessteuerung eines 3D-Druckprozesses ist eine Wärmebildkamera an einen 3D-Drucker angeschlossen oder steht mit der Steuervorrichtung des 3D-Druckers in Verbindung. Deren Ausgangssignal wird an die Steuervorrichtung übertragen.

Erfindungsgemäß besteht der 3D-Drucker aus einer Bauplattform, einer Lichtquelle, einer Aufnahmevorrichtung für Druckmaterial, einer Wärmebildkamera sowie einer Steuervorrichtung. Eine bevorzugte Anwendungsmöglichkeit umfasst Stereolithographie-Prozesse und digitale Lichtverarbeitungs-Prozesse.

Die Aufnahmevorrichtung besteht aus einer Wanne, welche nach oben hin offen sein kann, oder zumindest zur Bauplattform offen ist.

In dieser Aufnahmevorrichtung für Druckmaterial wird beispielsweise ein Monomer oder ein Monomerengemisch sowie ein Photoinitiator vorgelegt. Auch sind andere Ausgangslösungen wie ein photosensitives Monomer/Monomerengemisch oder eine verdünnte Monomerenlösung möglich.

Die Aufnahmevorrichtung weist als Boden eine Glasplatte und darauf eine lichtdurchlässige Schicht, beispielsweise eine Folie, auf. Auf dieser Folie kann eine Inhibitorschicht aufgebracht sein, die ein Anhaften des Druckmaterials beim Aushärten oder bei der Polymerisation verhindert.

In das Druckmaterial wird erfindungsgemäß eine Bauplattform eingeführt, so dass diese in das Druckmaterial eintaucht und bis fast zur lichtdurchlässigen Folie der Aufnahmevorrichtung reicht. Um einen definierten Abstand zwischen Bodenfolie und Bauplattform zu erreichen, kann die Bauplattform bis zum Kontakt mit der Bodenfolie abgesenkt und dann um den gewünschten, definierten Wert angehoben werden. Zwischen der Bodenfolie und der Bauplattform befindet sich somit eine definiert dicke Monomeren-Schicht, die anschließend ortsselektiv belichtet werden kann. Diese Schicht kann beispielsweise zwischen 50 und 100 µm stark sein.

Ein typischer Zyklus eines solchen Druckprozesses dauert in etwa 10 s, wobei die Belichtung durch die Lichtquelle 2 s davon ausmacht.

In bevorzugter erfindungsgemäßer Ausgstaltung wird das Objekt schichtweise erzeugt. Dies bedeutet, dass nach der Belichtung einer Schicht die Bauplattform angehoben wird, so dass Druckmaterial in den entstandenen Spalt fließen kann und im Anschluss dieses Material belichtet wird. Bei größeren Druckobjekten wird die Bauplattform zuerst um mehr als eine Schichtdicke, bevorzugt um ca. 1 cm angehoben, damit sich die belichtete Schicht besser von der Folie lösen und Druckmaterial in den entstehenden Spalt fließen kann. Anschließend wird die Bauplattform wieder auf die gewünschte Höhe abgesenkt, so dass die erwünschte Schichtdicke zwischen Bauplattform und Folie erreicht wird. Somit wird in jedem Belichtungsschritt das zu druckende Objekt um eine weitere Schicht des ausgehärteten Druckmaterials vergrößert.

Besonders vorteilhaft ist es, wenn die Bauplattform asymmetrisch angehoben wird. Beispielsweise kann mit der Anhebung an einer Seite oder einer Ecke begonnen werden. Dies ermöglicht es, dass sich das Baumaterial besser von der Folie löst. Die Scherkräfte sind geringer, so dass nur eine geringe Wahrscheinlichkeit besteht, dass die Folie reisst. Zudem wird die Lebensdauer der Folie erhöht, da weniger starke Kräfte auf diese wirken, als wenn die Bauplattform senkrecht nach oben gehoben wird. Bei der schichtweisen Erzeugung des Objektes kann mit einer Baugeschwindigkeit von ca. 0,5 mm/min gedruckt werden.

Zur Reduzierung der Scherkräfte ist es auch denkbar, dass die Vorrichtung so ausgestaltet ist, dass, während des Ablöseprozesses der gebauten Schicht, die Bauplattform vertikal verfährt und die Wanne sich in der Horizontalen bewegt. Alternativ können sie sich auch in einem gering geneigten Winkel zur Horizontalen bewegen.

In einer weiteren vorteilhaften Ausgestaltung kann das Objekt auch kontinuierlich erzeugt werden. Hierbei wird die lichtdurchlässige Schicht der Wanne des 3D-Druckers, welche mit dem Druckmaterial in Kontakt kommt, durch eine Inhibitor-Schicht vor Anhaftung des aushärtenden Druckmaterials geschützt. Ein Vorteil dieser Ausgestaltungsform ist, dass nicht einzeln gebildete Schichten von einer Folie gelöst werden müssen, sondern die Bauplattform während der Belichtung kontinuierlich mit einer definierten Geschwindigkeit, beispielsweise 10 mm/min, angehoben wird. Hierzu wird jedoch eine höhere Leistung der Lichtquelle benötigt, als bei einer schichtweisen Erzeugung. Somit wird ein Endprodukt erzielt, das keine einzelnen Schichten erkennen lässt, sondern eine homogen glatte Oberfläche aufweist. Außerdem erlaubt dieses Verfahren eine Beschleunigung des Druckprozesses und somit eine Reduzierung der Produktionszeit sowie eine damit einhergehende Minimierung der Produktionskosten.

Die Lichtquelle, die beispielsweise zentral unterhalb der lichtdurchlässigen Schicht der Aufnahmevorrichtung angebracht ist, kann beispielsweise ein sehr präziser Laser sein, der die optimale Wellenlänge passend zum jeweiligen Photoinitiator aussendet oder aber bevorzugt eine LED-Lichtquelle. Diese ist auf den lichtdurchlässigen Boden der Wanne und damit auf die Bodenfolie der Aufnahmevorrichtung gerichtet und kann somit von unten/außen durch die lichtdurchlässige Folie das Druckmaterial belichten. Dieses härtet bevorzugt zwischen der Bauplattform oder der bereits im vorigen Belichtungsprozess gefestigten oder teilgefestigten Schicht und der lichtdurchlässigen Folie aus und haftet an der Bauplattform oder der vorhergehenden Schicht, jedoch nicht an der lichtdurchlässigen Folie an.

Bei diesem Schritt wird die Schicht ortsselektiv belichtet. Dies kann entweder entlang der gesamten Fläche der Schicht oder nur in ausgewählten Teilen der Schicht, wie zum Beispiel zweidimensionaler Muster, erfolgen.

Durch die Lichtenergie der Lichtquelle startet aufgrund des Photoinitiators oder des photosensitiven Polymers die ortsselektive, exotherme Polymerisation nur an den belichteten Stellen.

Erfindungsgemäß wird während des Belichtungsvorgangs und somit während der Polymerisation an den belichteten Stellen kontinuierlich die Temperatur der gesamten Schicht, also die Wärmestrahlung der Schicht, mittels einer Wärmebildkamera ortsaufgelöst verfolgt. Die Wärmebildkamera befindet sich bevorzugt seitlich unterhalb der Aufnahmevorrichtung und ist auf die lichtdurchlässige Bodenfolie gerichtet.

Hierzu wird die Wärmebildkamera auf die untere Oberfläche der lichtdurchlässigen Folie, insbesondere dem belichteten Bereich dieser Folie, der beispielsweise für Anwendungen in der Dentaltechnik in der Größenordnung weniger Quadratzentimeter (1-10 cm²) liegt, gerichtet. Derartige Wärmebildkameras erfassen die Wärmeemission über die gesamte Fläche mit einer Ortsauflösung von wenigen Hundertsteln eines Quadratmillimeters zeitaufgelöst während (wenige Sekunden) und zwischen den Belichtungen (ca. 1 Minute). Die erhaltenen Daten einer solchen zeitaufgelösten Temperaturmessung über eine belichtete Fläche entsprechen einer dreidimensionalen Gauß-Verteilung der gemessenen Temperaturkurven. Die Steuervorrichtung kann somit aus den von der Wärmebildkamera gemessenen Werten, unter Berücksichtigung der Wärmeleitfähigkeit sowie Wärmekapazität der verwendeten Materialien (Druckmaterial sowie Materialien des Druckeraufbaus), eine zeitaufgelöste 2-dimensionale Temperaturverteilung über die gesamte Oberfläche der Folie errechnen.

Zum einen wird von der Wärmebildkamera der Teil der Lichtenergie, der zur Erwärmung der Oberfläche führt, erfasst. Dieser ist jedoch über den gesamten Belichtungsprozess annähernd konstant und wird durch die Steuervorrichtung abgezogen.

Des Weiteren wird durch die Wärmebildkamera die Energie, die bei der exothermen Polymerisation des Materials entsteht, erfasst. Die gemessene Temperatur an der Oberfläche entspricht somit der Emission von gewissen Wellenlängen und Wellenlängenbereichen der belichteten Fläche. Diese wird durch die Wärmebildkamera zeitaufgelöst erfasst.

Die Temperaturänderung dT/dt entspricht somit der ersten Ableitung der Temperaturkurve. Eine positive Temperaturänderung (dT/dt > 0) zeigt ein Aufheizen (Emissionswärme), eine negative Temperaturänderung (dT/dt < 0) ein Abkühlen (Emissionskälte) der Oberfläche an. Eine konstante Temperatur, also keine Temperaturänderung (dT/dt = 0), bedeutet eine konstante Oberflächen-Temperatur oder einen Maximal-/Minimalwert der Temperaturkurve (Tₘₐₓ oder Tₘᵢₙ).

Die Temperaturänderung über die Folienoberfläche wird mittels der Wärmebildkamera ortsaufgelöst erfasst und der Steuervorrichtung zugeleitet.

In vorteilhafter Ausgestaltung wird das Integral der Temperaturkurve, also die sogenannte Wärmemenge, ortsaufgelöst erfasst.

Der Zeitpunkt für das Ende der Belichtung wird durch das Erreichen einer vorher definierten Temperatur Tₘₐₓ oder einer vorher definierten Temperaturänderung dT/dt festgelegt. Wird dieser Wert oder diese Temperaturänderung mittels der Wärmebildkamera gemessen und durch die Steuervorrichtung erfasst, wird von der Steuervorrichtung ein Signal abgegeben. Die Steuervorrichtung beendet anschließend den Bauprozesses dieser Schicht durch Beenden der Belichtung.

Des Weiteren ist es möglich, dass aufgrund der Messung einer ungewünschten, inhomogenen Temperaturverteilung bestimmte Bereiche der Schicht weiterhin belichtet werden können, wobei andere Teile nicht weiter belichtet werden, da die Aushärtung an diesen Stellen bereits zufriedenstellend erfolgt ist. Damit kann die erwünschte Polymerisationsrate in allen Bereichen erreicht werden.

Die vorher definierte Temperatur Tₘₐₓ ist als die maximal erwünschte Aufheiztemperatur, die an der Oberfläche der polymerisierenden Schicht durch die Wärmebildkamera erfasst wird, festgelegt. Die Temperaturänderung dT/dt zu diesem Zeitpunkt konvergiert gegen null oder nimmt insbesondere den Wert null an. Da es in einem endlichen Zeitraum schwer möglich ist, die Temperaturänderung bis zum Wert null zu verfolgen, kann auch mit Hilfe eines definierten Schwellenwertes (beispielsweise dT/dt = 2 bis 5 K/s) gearbeitet werden.

Mittels dieser Überwachung des ortsaufgelösten Temperaturverlaufs können Schäden oder ungewollte Polymerisation des umliegenden Materials aufgrund von Überbelichtung verhindert werden. Bevorzugt wird die Belichtung beendet, sobald ein gewünschter, vorher definierter Aushärtungsgrad erreicht ist, da bei einer zu hohen oder sogar vollständigen Polymerisation der Monomere die Haftung der nächsten Schicht verringert würde. Außerdem weisen die als Lichtquelle verwendeten LED und LED-DMD oder andere Lichtquellen jeweils eine begrenzte, spezifische Leuchtdauer auf. Durch die Überwachung des ortsaufgelösten Temperaturverlaufs kann somit die optimale Belichtungsdauer bestimmt und eine unnötig lange Belichtung verhindert werden, was ansonsten die Lebensdauer der Lichtquelle unnötig verkürzen würde.

Nach Beenden der Belichtung muss die Schicht von der Folie gelöst werden. Dies geschieht, indem beispielsweise die Bauplattform um einen bestimmten Wert von der Folie angehoben wird.

Dieser Wert muss mindestens beispielsweise die Schichtstärke eines Druckvorgangs sein. Es ist aber bevorzugt die Bauplattform zunächst um einen größeren Wert anzuheben, um ein vollständiges Ablösen zu erleichtern, und anschließend auf die gewünschte Schichtstärke (beispeilsweise 50 bis 100 mm) abzusenken. Des Weiteren ist es denkbar, die Folie nach unten abzusenken. Hierzu ist es vorteilhaft, die Folie mit der Wann schräg abzusenken, also an einer Seite beginnend, damit sich die Folie sozusagen von dem ausgehärteten Druckmaterial abzieht.

Bei einem kontinuierlichen Druckprozess verhindert die Inhibitorschicht das Anhaften des ausgehärteten Druckmaterials an der lichtdurchlässigen Folie. Dies macht einen solchen Ablösevorgang somit überflüssig.

Eine Überbelichtung bei einem 3D-Stereolithographie-Vorgang oder einem digitalen Lichtverarbeitungs-Prozess führt auch zu einer zu starken Adhäsion zwischen Material und Folie sowie einem unnötig verlängertem Druckprozess. Dies kann mittels des erfindungsgemäßen Verfahrens vermieden werden, da die optimale Belichtungsdauer mittels der Temperaturverfolgung durch die Wärmebildkamera bestimmt wird. Dies ermöglicht - neben der schon erwähnten Schonung der Lichtquelle - auch eine erhöhte Lebensdauer der lichtdurchlässigen Folie sowie eine Zeitersparnis. Das übermäßige Anhaften kann zu Schäden, Kratzern oder dem Ablösen der Inhibitorschicht und/oder zu Kratzern, Schäden oder sogar dem Reißen der Folie, oder beidem, führen. Solche entstandenen Schäden können nur behoben werden, indem der Druckprozess unterbrochen wird oder er müsste sogar ganz abgebrochen werden, da ansonsten Baufehler im Endprodukt zurückbleiben.

Beim Ablösen gelangt neues, zu polymerisierendes Material in den entstandenen Spalt. Dies kann durch die Wärmebildkamera als ein starker Abfall des gemessenen Wärme-Emission, also einem Abfall der Temperatur (Temperaturänderung dT/dt << 0) erkannt werden. Nach dem Ablösen und nach dem ersten sprunghaften Abfall der Temperatur bei erstmaligem Einströmen von Druckmaterial kann jeglicher weitere Materialfluss mit oder ohne Gasblasen zwischen der Bauplattform und der Folie durch die Wärmebildkamera je als Temperaturänderung (dT/dt > 0 oder dT/dt < 0) erfasst und in der Steuervorrichtung erkannt werden.

Des Weiteren ist es günstig, dass Verunreinigungen auf der Folie mit oder ohne Inhibitorschicht - wie beispielsweise durch Sedimentation, Kontamination, Anhaften von Resten möglicher Fehlbau-Vorgänge oder Fremdpartikeln - erfasst werden können. Solche Fälle können erkannt werden, indem beispielsweise bei einer Bewegung der Bauplattform eine zu geringe Änderung der Temperatur durch die Wärmebildkamera erfasst und in der Steuervorrichtung erkannt wird. Dies gilt nicht nur bei einer zu geringen Änderung der Temperatur über der gesamten Folienoberfläche, sondern auch auf Teilflächen, also wenn durch die Wärmebildkamera registriert wird, dass die Temperaturverteilung/-änderung nicht über die gesamte Folienoberfläche plausibel ist. Die Steuervorrichtung gibt dann ein Warnsignal aus.

Besonders wichtig ist dies, wenn Gasblasen oder kleine Verunreinigungen auf der Folie oder auf der Inhibitorschicht, insbesondere zwischen dem Objekt und der Folie oder Inhibitorschicht, zurückgeblieben sind. Dies wird erkannt, da die Temperatur am Ort einer Gasblase geringer ist als in der Umgebung. Die Wärmebildkamera erfasst die Temperatur ortsaufgelöst und sehr präzise, so dass die Steuervorrichtung derartige Temperaturunterschiede erkennen kann und folglich ein Fehler- oder Warnsignal ausgeben kann.

Bevorzugt ist die Ortsauflösung der Wärmebildkamera im Bereich der Schichtstärke des Bauprozesses, also etwa 0,1 mm x 0,1 mm, kann aber auch wesentlich größer, z.B. das Zehnfache, also 1 mm x 1 mm oder wesentlich kleiner, z.B 0,025 x 0,025 mm, sein.

Die Steuervorrichtung gibt den Belichtungsprozess einer nächsten Schicht erst frei, wenn diese Störungen beseitigt sind oder durch den Benutzer manuell die Belichtung freigegeben wird. Die Störungen werden als beseitigt erkannt, wenn durch die Wärmebildkamera registriert und in der Steuervorrichtung erkannt wird, dass keine Gasblase/n oder keine Verunreinigungen auf der Folie zurückgeblieben sind. Dies ist daran erkennbar, dass die Wärmebildkamera bei Materialfluss eine homogene Temperaturänderung über die gesamte Oberfläche misst. Die Steuervorrichtung erkennt in diesem Fall keine Unregelmäßigkeiten der Temperaturänderung und somit, dass keine Verunreinigungen oder Gasblasen auf der Oberfläche der Folie haften. Nach Beenden des Einströmens von neuem Druckmaterial, also nach Beenden des Materialflusses wird durch die Wärmebildkamera eine konstante Temperatur über die gesamte Oberfläche der Folie gemessen. Die Steuervorrichtung verifiziert dadurch ihre Ergebnisse bei Materialfluss und kann überprüfen, ob an der Oberfläche der Folie wirklich keine Verunreinigungen oder Gasblasen zurückgeblieben sind.

In einer weiteren Ausgestaltung ist es vorgesehen, dass bei beim Erkennen von Störfaktoren der gesamte Druckvorgang abgebrochen wird.

Außerdem gibt die Steuervorrichtung den Belichtungsprozess der nächsten Schicht erst frei, wenn durch die Wärmebildkamera registriert und durch die Steuervorrichtung erkannt worden ist, dass nach einer Temperaturänderung, die einen vorgegebenen Schwellwert übersteigt - was einem Materialfluss entspricht - keine weitere signifikante Temperaturänderung (dT/dt konvergiert gegen 0) messbar ist. Dies bedeutet, dass sich das gesamte ausgehärtete Material von der Folienoberfläche gelöst haben muss und der Materalfluss sich dem Stillstand annähert.

In vorteilhafter Weiterbildung gibt die Steuervorrichtung ein Warn- oder Fehlersignal aus, wenn die Wärmebildkamera registriert und die Steuervorrichtung erfasst, dass sich die Wärme-Emission bei Beginn der Belichtung nicht innerhalb einer vordefinierten Zeit, vorzugsweise 2 Sekunden, ändert. Dies würde bedeuten, dass entweder die Lichtquelle ausgefallen ist, die belichtete Schicht bereits vollständig ausgehärtet ist oder die Polymerisation aufgrund einer anderen Fehlerquelle nicht gestartet wurde. Auch könnte sich die Schicht beispielsweise nicht komplett von der Folie gelöst haben, die Folie gerissen, oder das Druckmaterial verbraucht sein.

Somit können mittels der Überwachung des Temperaturverlaufs während des Polymerisationsvorgangs und auch zwischen der Belichtung verschiedener Schichten frühzeitig die meisten Fehler während des 3D-Druckprozesses, wie zum Beispiel die Verschmutzung der Folie, Ablagerungen von Fremdkörpern, nicht vollständiges Ablösen des Objekts von der Folie oder Alterung der Folie, LED oder LED-DM D, erkannt werden.

Als Folge dessen wird bei Ausgabe eines Warnsignals der Belichtungsvorgang durch die Steuervorrichtung verzögert, insbesondere pausiert oder abgebrochen. Der Bauvorgang der nächsten Schichten kann zur Schadensminimierung beispielsweise automatisch durch die Steuervorrichtung oder durch Benutzereingriff angepasst werden. Bei der Ausgabe eines Warnsignals während eines Belichtungsvorgangs, ist es auch möglich die aktuelle Belichtung der Schicht erneut zu starten, so dass beispielsweise bei Ausfall der Lichtquelle nach deren Überprüfung und Reparatur der Belichtungsvorgang fortgesetzt werden kann, ohne eine fehlerhafte Schicht im Endprodukt zu erhalten.

In einer vorteilhaften Ausgestaltung können die Abmessungen der belichteten Schicht des 3D-gedruckenten Objekts während der Polymerisation mittels mehrdimensional, insbesondere 2-dimensional ortsaufgelöster Temperaturmessung verfolgt werden. Hierzu wird während des Druckvorgangs, insbesondere je während der Belichtung und zwischen den Belichtungen, die Wärmeemission der Oberfläche der lichtdurchlässigen Folie mit einer Wärmebildkamera verfolgt und aufgezeichnet. Die belichteten Stellen strahlen mehr Wärme aus als die restlichen Bereiche. Dies wird sowohl durch die eingestrahlte Lichtenergie der Lichtquelle als auch durch die entstandene Wärme während des exothermen Polymerisationsprozesses verursacht. Somit kann die Steuervorrichtung aus den ermittelten Daten der Wärmebildkamera die tatsächlichen Abmessungen der belichteten Schicht berechnen und mit den theoretischen Werten, also den Rohdaten vor der Belichtung, die der Lichtquelle zugeleitet wurden, vergleichen.

Zur Überwachung und Überprüfung des Druckprozesses werden bei jedem Belichtungsvorgang mit der Wärmebildkamera die Abmessungen der belichteten Teile der Folie ermittelt und mittels der Steuervorrichtung gespeichert. Diese Daten können anschließend untereinander und mit den Rohdaten verglichen werden.

Nehmen die Abmessungen einer belichteten Schicht im Vergleich zur vorherigen Schicht ab, kann davon ausgegangen werden, dass der belichtete Bereich verkleinert wird. Oder, bei einer Zunahme der Abmessungen der belichteten Schicht vergrößert wird. Dies ist besonders bei sehr großen Unterschieden zwischen den Schichten wichtig. Der große Unterschied deutet auf einen Fehler im Bauprozess hin. Wird eine solche, unerwartet große Änderung der belichteten Fläche zwischen zwei oder mehreren Schichten gemessen, wird von der Steuervorrichtung ein Warnsignal, insbesondere ein Fehlersignal, ausgegeben.

Bisher war es bei 3D-Druck-Verfahren nötig, eine sogenannte Verzerrungskorrektur durchzuführen, um die Verschiebung der einzelnen Schichten gegeneinander während des Druckprozesses auszugleichen. Erfindungsgemäß wird diese Verzerrungskorrektur nun durch die Überwachung der Flächenzu- oder abnahme der gedruckten Schicht eines herzustellenden 3D-Objektes überflüssig, da die Größe des Objekts während der Polymerisation mitverfolgt wird und der Bauprozess dementsprechend angepasst werden kann. Bei der Ausgabe eines Warnsignals der Steuervorrichtung kann der Benutzer - oder gegebenenfalls die Steuervorrichtung automatisch - entscheiden, ob die große Flächenzu- oder abnahme beabsichtigt war oder nicht. Falls diese nicht beabsichtigt war, kann die Fehlerquelle beseitigt werden. Bei einer zu kleinen Schicht kann der gewünschte Bereich dieser fehlerhaften Schicht anschließend erneut belichtet werden, um eine optimale Aushärtung der gewünschten Fläche zu erzielen. Bei einer nicht beabsichtigten, zu großen Belichtung ist der Fehler schwerer zu beheben. Hierbei kann nach Entfernen der Feherquelle die nächste Schicht fehlerfrei gedruckt werden und nach Beenden des Druckprozesses die überstehenden unerwünschten Teile per Hand durch den Benutzer entfernt werden. Dies kann beispielsweise mit einem gewöhnlichen Handschleifer geschehen.

Der erfindungsgemäße 3D-Drucker besteht aus einer Bauplattform, einer Lichtquelle, einer Aufnahmevorrichtung für das Druckmaterial, einer Steuervorrichtung sowie einer angeschlossenen Wärmebildkamera. Die Wärmebildkamera überträgt ihr Ausgangssignal an die Steuervorrichtung.

Die Steuervorrichtung kann beispielsweise ein Computer mit einer speziellen Software sein, welche die 3D-Druckeinheit so ansteuert, dass ein Objekt aus den Druckmaterial wie oben beschrieben schichtweise oder kontinuierlich erzeugt werden kann.

In einer weiteren erfindungsgemäßen Ausgestaltung ist an den 3D-Drucker eine DMD-Einheit angeschlossen. Wird nun durch die Wärmebildkamera und die Steuervorrichtung erkannt, dass eine Schicht ungleichmäßig aushärtet, kann die Strahlung mittels der DMD-Einheit von den schon durchgehärteten Bereichen abgelenkt werden. Somit werden die noch nicht vollständig ausgehärteten Bereiche weiterhin belichtet und gleichzeitig eine Überbelichtung der bereits vollständig ausgehärteten Bereiche vermieden.

Dieser Prozess basiert auf der Projektionstechnik "Digital Light Processing" (DLP). Hierbei werden Bilder, oder in diesem Fall Lichtstrahlen mit einer definierten Lichtenergie, erzeugt, indem ein digitales Bild, oder Wellenlängen definierter Energien, auf einen Lichtstrahl aufmoduliert werden. Der Lichtstrahl wird durch eine Anordnung von beweglichen Mikrospiegeln in einzelne Bildpunkte, also Pixel, zerlegt und anschließend einzeln entweder in den Projektionsweg hinein oder aus dem Projektionsweg hinaus reflektiert. Dies erlaubt eine sehr präzise und feine Steuerung der Lichtstrahlen auf die gewünschten Bereiche der unteren Oberfläche der lichtdurchlässigen Folie, so dass eine Überbelichtung einzelner Bereiche verhindert werden kann.

Diese Anordnung beweglicher Mikrospiegel inklusive deren Ansteuerungstechnik wird als DMD-Einheit (DMD = Digital Micromirror Device) bezeichnet. Bevorzugt sind die einzelnen Mikrospiegel einer DMD-Einheit in Form einer quadratischen Matrix angeordnet und können durch die Steuervorrichtung einzeln je nach Bedarf gesteuert, also verkippt, werden. Ein derartiges Verkippen zwischen einer "on"- und einer "off"-Position, welches für jeden einzelnen Mikrospiegel autonom gesteuert werden kann, wird durch das Anlegen elektrostatischer Felder hervorgerufen. Dies ermöglicht eine überraschend feine und präzise Steuerung der Licht- oder Laserstrahlung.

Bevorzugt sind für jeden einzelnen Mikrospiegel zwei stabile Endzustände, hier eine "on"- und einer "off"-Position, definiert, zwischen welchen der Mikrospiegel innerhalb einer Sekunde oftmals, insbesondere bis zu 5000 mal, wechseln kann. Die "on"-Position beschreibt den Zustand, in dem die Lichtenergie zu dem zu belichtenden Bereich geleitet wird, die "off"-Position hingegen den Zustand, in dem die Lichtenergie von der Belichtungsoberfläche weg gelenkt wird.

Die Kantenlänge dieser einzelnen Mikrospiegel einer DMD-Einheit beträgt bevorzugt wenige Mikrometer, insbesondere etwa 16 µm. Die Anzahl der Spiegel innerhalb einer DMD-Einheit entspricht der Auflösung des projizierten Bilds, also hier der gewünschten Auflösung des belichteten Bereichs, wobei bevorzugt auch mehrere Pixel durch einen Mikrospiegel dargestellt werden können.

In einer bevorzugten Ausgestaltung können die einzelnen Pixel auch in unterschiedlichen, beliebigen Helligkeitsstufen angesteuert werden. Dies wird erreicht, indem die einzelnen Mikrospiegel über eine binäre pulsweitenmodulierte Ansteuerung, also einer Pulsdichtemodulation, gesteuert werden. Die Helligkeitsstufe eines Pixels ist also abhängig davon, wie lange ein Mikrospiegel angeschaltet ist.

In einer bevorzugten Ausgestaltung kann vor der DMD-Einheit, also in den Projektionsweg der Lichtstrahlung, ein Farbfilter angeordnet werden. Dieser kann aus dem umgelenkten Licht beispielsweise eine Wellenlänge herausfiltern oder den umgelenkten Lichtstrahl auf eine Wellenlänge beschränken. Es ist auch möglich, anstelle eines Farbfilters einen Monochromator, zur spektralen Isolierung einer bestimmten Wellenlänge aus dem einfallenden Strahl, zu verwenden.

Ein erheblicher Vorteil dieser DLP-Technik mit einer DMD-Einheit ist die erhöhte Präzision. Die Lichtenergie, also die Lichtstrahlung, kann sehr präzise von den Bereichen der unteren Oberfläche der lichtdurchlässigen Folie, in welchen das zu polymerisierende Material bereits einen erwünschten Aushärtungsgrad aufweist, weg geleitet werden, so dass eine Überbelichtung vermieden wird.

Weitere Vorteile, Einzelheiten und Merkmale ergeben sich aus der nachfolgenden Beschreibung mehrerer Ausführungsbeispiele der Erfindung anhand der Zeichnungen.

Es zeigen:
- Fig. 1: eine schematische Darstellung des seitlichen Querschnitts eines erfindungsgemäßen 3D-Druckers in einer ersten Ausführungsform;
- Fig. 2: eine schematische Darstellung des seitlichen Querschnitts einer weiteren Ausführungsform eines erfindungsgemäßen 3D-Druckers;
- Fig. 3: eine schematische Darstellung der Lichtleistung, des Temperaturverlaufs sowie der z-Position der Bauplattform während des 3D-Druckprozesses;
- Fig. 4: eine weitere schematische Darstellung der Lichtleistung, des Temperaturverlaufs sowie der z-Position der Bauplattform während des 3D-Druckprozesses; und
- Fig. 5: eine schematische Darstellung eines optischen Aufbaues einer weiteren Ausführungsform eines erfindungsgemäßen 3D-Druckers.

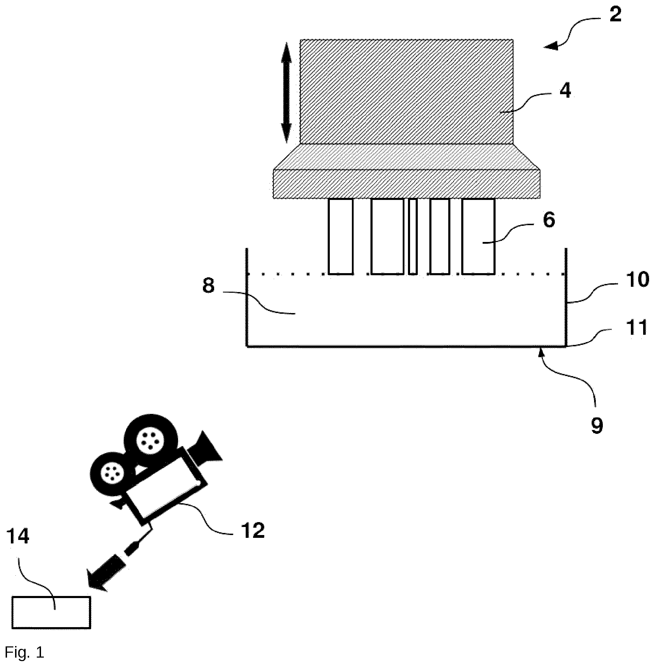

Aus **Fig. 1** ist eine schematische Darstellung des seitlichen Querschnitts eines erfindungsgemäßen 3D-Druckers **2** für einen Stereolithographieprozess oder einen digitalen Lichtverarbeitungs-Prozess mit einer Bauplattform **4,** einer Aufnahmevorrichtung **10** für Druckmaterial **8,** einer Wärmebildkamera **12** sowie einer Steuervorrichtung **14** ersichtlich. In dieser Ausführungsform ist schematisch an der Unterseite der Bauplattform **4** ausgehärtetes Druckmaterial **6** dargestellt. Das ausgehärtete Druckmaterial **6** kann je nach Druckobjekt unterschiedliche Ausgestaltung annehmen und ist hier mittels unterschiedlich starker Säulen dargestellt. Weiterhin ist mittels eines Pfeiles die Bewegungsrichtung der Bauplattform **4** angedeutet, die vertikal nach oben und unten gefahren werden kann.

Unterhalb der Bauplattform **4** befindet sich eine Aufnahmevorrichtung **10** für Druckmaterial **8,** wobei der Füllpegel des Druckmaterials **8** mittels einer gestrichelten Linie dargestellt ist. Die untere Abgrenzung **11** der Aufnahmevorrichtung **10** besteht aus einem lichtdurchlässigen Material, bevorzugt einer lichtdurchlässigen Folie.

Auf die äußere und untere Oberfläche **9** dieser Folie **11** ist eine Wärmebildkamera **12** gerichtet, die wiederum mit einer Steuervorrichtung **14** verbunden ist. Mittels dieser Wärmebildkamera **12** kann die Temperatur des zu überprüfenden Teiles der Oberfläche **9** der Folie **11** gemessen werden. Hierzu wird die Wärmebildkamera auf die untere Oberfläche **9** der sehr dünnen Folie **11** gerichtet und die Wärmeemission während und zwischen den Belichtungen aufgenommen. In diesem Fall handelt es sich um ein Dentalrestaurationsteil und der zu überwachende Bereich der Folie **11** beträgt in etwa 5 cm x 5 cm. Die Steuervorrichtung **14** kann aus den von der Wärmebildkamera **12** aufgenommenen Daten unter Berücksichtigung der Wärmeleitfähigkeit sowie Wärmekapazität der verwendeten Materialien - der lichtdurchlässigen Folie **11** sowie des Druckmaterials **8** - eine 2-dimensionale Temperaturverteilung über den zu überprüfenden Teil der Oberfläche **9** der Folie **11** erstellen.

Bei Anormalitäten der 2-dimensionalen Temperaturverteilung zwischen zweier oder mehrerer Schichten und/oder anderen unerwarteten Temperaturänderungen wird von der Steuervorrichtung **14** ein Signal zur Warnung vor Fehlern abgegeben. Mögliche Fehler sind beispielsweise das Ausbleiben eines sprunghaften Anstiegs der Wärme-Emission bei Start der Belichtung oder das Ausbleiben eines sprunghaften Abfalls der Temperatur bei Lösen des ausgehärteten Druckmaterials von der Folie. Außerdem ist es möglich, dass beim Vergleich der 2-dimensionalen Temperaturverfolgung - und damit Vergleich der belichteten und ausgehärteten Flächen - zweier oder mehrerer Schichten eine zu starke Flächenzu- oder abnahme der ausgehärteten Schicht registriert wird.

Bei einer Registrierung von Fehlern im Druckprozess kann dieser gegebenenfalls durch die Steuervorrichtung **14** automatisch angepasst werden. Häufiger ist es jedoch, dass bei Ausgabe eines Warnsignals, die Steuervorrichtung **14** den Druckprozess pausiert, bis vom Benutzer alle Fehler beseitigt wurden und der Druckprozess vom Benutzer wieder freigegeben wird.

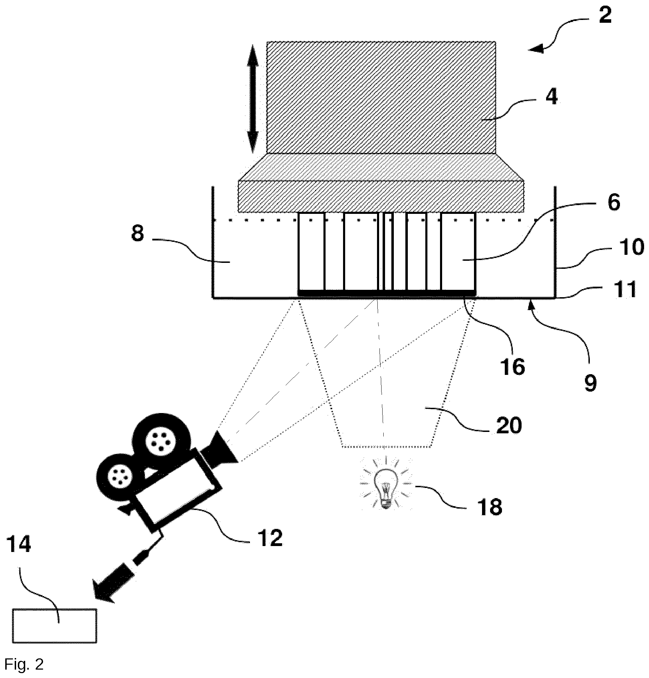

Aus **Fig. 2** ist eine schematische Darstellung des seitlichen Querschnitts einer weiteren Ausführungsform eines erfindungsgemäßen 3D-Druckers **2** ersichtlich. Hierbei ist ein aktiver Druckprozess - also eine stattfindende Belichtung einer Schicht - mittels eines 3D-Druckers nach **Fig. 2** dargestellt. Die hier dargestellten Säulen des ausgehärteten Druckmaterials **6,** welche schematisch das bereits gedruckte Objekt darstellen sollen, tauchen nun in das Druckmaterial **8** ein. Zentral unterhalb der Aufnahmevorrichtung **10** ist schematisch eine Lichtquelle **18** mit einem kegelförmigen Belichtungsbereich **20** dargestellt. Eine derartige Lichtquelle kann ein sehr präziser Laser sein, welcher die optimale Wellenlänge passend zum jeweiligen Photoinitiator aussendet, oder aber bevorzugt auch eine LED-Lichtquelle. Zur Vereinfachung ist hier der gesamte mögliche Erfassungsbereich dargestellt, wobei jedoch die Erfassung ortsaufgelöst mit einem Fokusfleck von beispielsweise 0,5 mm x 0,5 mm erfolgen kann. Zwischen dem bereits ausgehärtetem Druckmaterial **6** und der lichtdurchlässigen Folie **11** ist schematisch neu ausgehärtetes Material **16** dargestellt.

Zur Vereinfachung ist eine kegelförmige Belichtung **20** dargestellt. Es wäre jedoch auch möglich, mittels mehrerer Lichtquellen, welche kleinere Bereiche bestrahlen, oder passenden Ablenkspiegeln nur die gewünschten Bereiche (1 Pixel z.B. 20 x 20 µm) zwischen dem bereits ausgehärteten Material **6** und der lichtdurchlässigen Folie **11 -** gegebenenfalls mit kleiner Flächenzu- oder abnahme - zu belichten. Die Wärmebildkamera **12** ist in dieser Ausführungsform nur auf den belichteten Bereich der Folienoberfläche **9** gerichtet - auch wenn dies in den Figuren nicht im Einzelnen dargestellt ist - und ist fokussiert und nimmt daher nur die Wärmeemission dieses - kleinen - Bereichs auf. Zur Veranschaulichung ist dies mittels strichpunktierter Linien dargestellt. Durch diese Konzentration auf den wichtigen Bereich, also den genauen Bereich des 3D-Druckvorgangs, ist es möglich, unnötig große Datenmengen und damit eine langsame Verarbeitung durch die Steuervorrichtung **14** zu vermeiden.

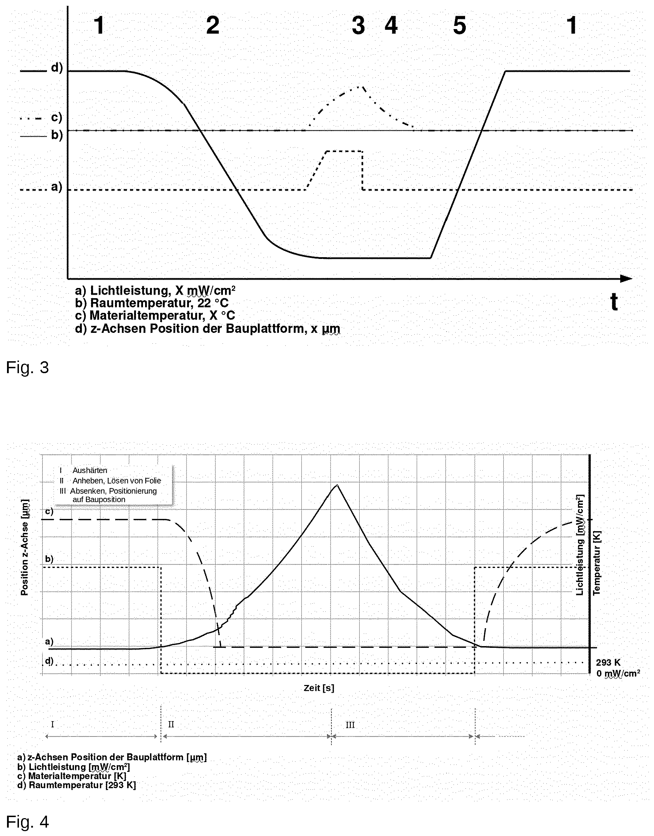

Aus **Fig. 3** ist die Lichtleistung, der Temperaturverlauf sowie die z-Position der Bauplattform **4** - also die interne Höhenverschiebung der Bauplattform **4** im Bezug auf die lichtdurchlässige Folie **11** - während des 3D-Druckprozesses graphisch dargestellt.

Die Kurve **a)** gibt Informationen über die Lichtleistung der Lichtquelle **18** in [mW/cm²]. Bei Einschalten der Lichtquelle **18** nimmt die Lichtleistung linear mit einer starken Steigung, optimalerweise sprunghaft, zu. Im Laufe der Belichtung wird die Lichtleistung konstant gehalten und anschließend abgeschaltet, was einen sprunghaften Abfall der Lichtleistung nach sich zieht.

Die Kurve **b)** zeigt den Verlauf der Raumtemperatur während des 3D-Druckprozesses. Diese sollte optimalerweise konstant gehalten werden, um eine fehlerhafte Messung des Temperaturverlaufs an der Folienoberfläche **9** zu vermeiden.

Die Kurve **c)** zeigt einen optimalen Temperaturverlauf an der Oberfläche **9** der lichtdurchlässigen Folie **11** während des Druckprozesses. Dieser Temperaturverlauf wird durch die Wärmebildkamera **12** aufgenommen und durch die Steuervorrichtung **14** ausgewertet. Die Temperatur nimmt hierbei zum Zeitpunkt des Einschaltens der Lichtquelle **18** zu. Dies wird durch die einstrahlende Lichtleistung der Lichtquelle **18,** sowie das Einsetzen der exothermen Polymerisation des Druckmaterials **8** verursacht. Nähert sich die Temperaturänderung dT/dt einem bestimmten Wert möglichst nahe null, insbesondere dem Wert null an, so ist das Maximum der Temperatur während des Polymerisationsprozesses Tₘₐₓ annährend erreicht. Der Wert dT/dt = 0 ist in einer endlichen Zeit nicht zu erreichen, daher wird auf einen Wert nahe null zurückgegriffen, um die Belichtungsdauer so kurz wie mögliche zu halten und trotzdem eine angemessene Aushärtung des Druckmaterials **8** zu erreichen. Zu diesem Zeitpunkt wird die Lichtquelle **18** abgeschaltet und die Temperatur der Oberfläche **9** der lichtdurchlässigen Folie **11** nimmt langsam wieder ihren Ausgangswert an.

Die Kurve **d)** gibt Informationen über die z-Position der Bauplattform **4** - also die interne Höhenverschiebung der Bauplattform **4** im Bezug auf die lichtdurchlässige Folie **11** - während des Verlaufs eines 3D-Druckprozesses. Die Bauplattform **4** wird vor der Belichtung in die Nähe der lichtdurchlässigen Folie **11** gefahren, um einen definierten Spalt von x mm (x kann je nach Erfordernissen angepasst werden) zu erreichen.

Nach Beenden des Belichtungsprozesses wird die Bauplattform **4** wieder von der Folie **11** weg bewegt, um ein Ablösen des ausgehärteten Materials **6** von der lichtdurchlässigen Folie **11** zu erreichen.

Außerdem sind in **Fig. 3** die Zeiträume **1** bis **5** markiert. Diese bezeichnen die einzelnen Abschnitte des 3D-Druckprozesses. Bereich **1** ist der Ausgangswert und stellt die Ausgangsposition und Temperatur ohne Belichtung dar. Dieser Punkt wird optimalerweise bei allen Kurven **a)** bis **d)** nach dem Druckprozess wieder erreicht.

Bereich **2** zeigt die Annäherung der Bauplattform **4** an die lichtdurchlässige Folie **11.** Zu diesem Zeitpunkt ist die Lichtquelle **18** ausgeschaltet und die Temperaturen entsprechen dem Ausgangswert. Am Ende von Bereich **2,** also bei optimaler Annäherung der Bauplattform **4** an die Folie **11,** wird die Lichtquelle **18** eingeschaltet und die Polymerisation startet. Dies kann an der beginnenden Temperaturerhöhung von Kurve **c)** erkannt werden.

In Bereich **3** ist die maximale Aufheiztemperatur Tₘₐₓ der Folienoberfläche **9** während der Belichtung erreicht. Hier nähert sich die Temperaturänderung dT/dt einem bestimmten Wert, insbesondere dem Wert null an. Wenn dieser Wert erreicht ist, wird die Lichtquelle **18** abgeschaltet und die Temperatur der Oberfläche **9** der lichtdurchlässigen Folie **11** beginnt wieder zu fallen.

Bereich **4** bezeichnet den Abkühlungsprozess der Folienoberfläche **9,** nachdem die Belichtung beendet wurde und somit die Polymerisation beendet ist. Bei Erreichen der Ausgangstemperatur der Folienoberfläche **9** beginnt Zeitraum **5,** an welchem die Bauplattform **4** wieder in ihre Ausgangsposition fährt und sich das polymerisierte Druckmaterial **6** somit von der lichtdurchlässigen Folie **11** löst. Am Ende von Bereich **5** werden für alle Parameter wieder ihre Ausgangswerte (Bereich 1) erreicht.

Aus **Fig. 4** ist eine modifizierte Ausführungsform gegenüber der gemäß **Fig. 3** dargestellt. Hierbei ist wiederum die Lichtleistung, der Temperaturverlauf sowie die Z-Position der Bauplattform **4** - also die interne Höhenverschiebung der Bauplattform **4** im Bezug auf die lichtdurchlässige Folie **11** - während des 3D-Druckprozesses graphisch dargestellt.

Im Vergleich zu **Fig. 3** ist Z-Position der Bauplattform **4** unterschiedlich. Kurve **a)** zeigt die Z-Position der Bauplattform **4** - also die interne Höhenverschiebung der Bauplattform **4** im Bezug auf die lichtdurchlässige Folie **11** - während des Verlaufs eines 3D-Druckprozesses. Die Bauplattform **4** wird nach der Aushärtung (Belichtung) von der lichtdurchlässigen Folie **11** weg gefahren und anschließend wieder angenähert, um einen definierten Spalt von x mm (x kann je nach Erfordernissen angepasst werden) zu erreichen.

Die Kurve **b)** zeigt den Verlauf der Lichtleistung der Lichtquelle **18** in [mW/cm²]. Bei Abschalten der Lichtquelle **18** nimmt die Lichtleistung sprunghaft, zu. Während die Bauplattform **4** bewegt wird, ist die Lichtquelle ausgeschaltet und hat somit eine Leistung von 0 mW/cm². Während der Belichtung wird die Lichtleistung konstant gehalten.

Die Kurve **c)** zeigt, ähnlich zu **Fig. 3****,** einen möglichen Temperaturverlauf an der Oberfläche **9** der lichtdurchlässigen Folie **11** während des Druckprozesses. Die Temperatur nimmt hierbei zum Zeitpunkt des Ausschaltens der Lichtquelle **18** und Z-Verschiebung der Bauplattform **4** stark ab und bleibt bei Erreichen eines gewissen Wertes, insbesondere der Temperatur des flüssigen Druckmaterials **8,** konstant. Wird die Lichtquelle wieder eingeschaltet, nimmt die Temperatur wieder zu. Dies wird durch die einstrahlende Lichtleistung der Lichtquelle **18,** sowie das Einsetzen der exothermen Polymerisation des Druckmaterials **8** verursacht. Nach Vollendung der Aushärtung bleibt die Temperatur wiederum konstant (Temperaturänderung dT/dt nähert sich dem Wert null an). Dieser entspricht dem Maximum der Temperatur während des Polymerisationsprozesses Tₘₐₓ.

Die Raumtemperatur (hier Kurve **d))** während des 3D-Druckprozesses sollte auch hier möglichst konstant gehalten werden, um eine fehlerhafte Messung des Temperaturverlaufs an der Folienoberfläche **9** zu vermeiden.

Außerdem sind in **Fig. 4** die Zeiträume **I** bis **III** markiert. Diese bezeichnen die einzelnen Abschnitte des 3D-Druckprozesses.

Bereich **I** zeigt die Z-Position der Bauplattform **4** während des Belichtungsvorganges. Die Lichtquelle **18** ist hierbei eingeschaltet und die Folienoberfläche **9** zeigt die maximale Aufheiztemperatur T_{max,} die während der Belichtung erreicht wird. Die Temperaturänderung dT/dt nähert sich hier dem Wert null an.

Bereich **II** zeigt die Veränderung der Z-Position der Bauplattform **4** zwischen zwei Belichtungsvorgängen. Die Bauplattform **4** wird angehoben. Zu Beginn der Bewegung der Bauplattform **4** wird die Lichtquelle **18** abgeschaltet, wodurch die Temperatur an der Oberfläche **9** der lichtdurchlässigen Folie **11** stark abnimmt und bei Erreichen einer gewissen Temperatur, insbesondere der Temperatur des flüssigen Druckmaterials **8,** bis zum Ende dieses Bereichs **II** konstant bleibt.

Bereich **III** zeigt wiederum das Absenken der Z-Position der Bauplattform **4,** beim Beginn eines Belichtungsvorganges. Die Lichtquelle wird wieder eingeschaltet, so dass die Temperatur an der Oberfläche **9** der lichtdurchlässigen Folie **11** wieder zunimmt. Dies wird durch die einstrahlende Lichtleistung der Lichtquelle **18,** sowie das Einsetzen der exothermen Polymerisation des Druckmaterials **8** verursacht.

Nach Vollendung der Aushärtung nimmt die Temperatur wieder den konstanten Wert Tₘₐₓ entsprechend Bereich **I** an (Temperaturänderung dT/dt nähert sich dem Wert null an). Dies zeigt das Ende des Polymerisationsprozesses an, so dass der Zyklus von neuem beginnen kann.

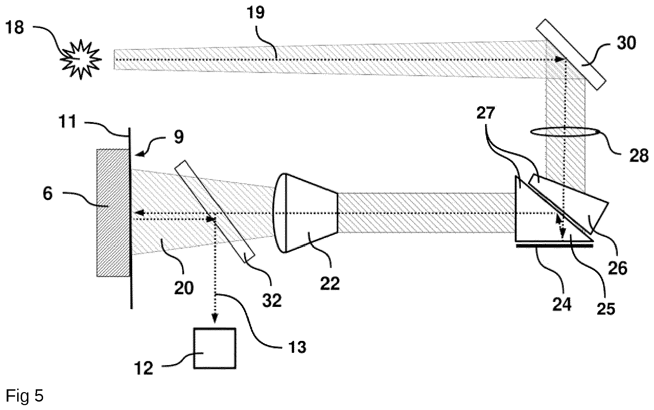

Aus **Fig. 5** ist eine schematische Darstellung einer weiteren Ausführungsform eines erfindungsgemäßen 3D-Druckers **2** ersichtlich. Die Besonderheit ist hier die verwendete Optik, die verwendet wird, um die Lichtstrahlung zum Druckobjekt oder Druckmaterial **6,** also zur Oberfläche **9** der lichtdurchlässigen Folie **11,** hin und die Wärme- oder IR-Strahlung vom Druckobjekt/ Druckmaterial **6** zur Wärmebildkamera **12** zu leiten.

Die Lichtquelle **18** befindet sich in dieser Ausführungsform neben dem zu druckenden Objekt und ist in der Darstellung gemäß Fig. 5 oberhalb dieser dargestellt. Aus der Lichtquelle 18 austretende, der Belichtung dienende Strahlung **19** wird über einen Spiegel **30** zu einer Sammellinse **28** abgelenkt.

Der Spiegel **30** ist in einer vorteilhaften Ausgestaltung mit einem Kantenfilter so ausgebildet, dass die Strahlung 19 zuverlässig reflektiert wird, aber Tageslicht frei durch den Spiegel dringen kann. Die Linse **28** ist dazu geeignet, die einzelnen Lichtstrahlen der Belichtungs-Strahlung **19,** und gegebenenfalls auch die zusätzliche Tageslicht-Strahlung, zu sammeln und zu parallelisieren. Die nun parallelen Strahlen der Belichtungs-Strahlung **19** werden von der (Sammel-) Linse **28** zu zwei laminierten Prismen **25** und **26** und einer DMD-Einheit **24** weitergeleitet.

In dieser Ausgestaltungsform bilden die beiden Prismen **25** und **26** zusammen ein sogenanntes "Total Internal Reflections Prism" (TIR Prisma) 27. Die Totalreflexion ("Total Internal Reflection") ist eine bei Wellen, wie beispielsweise Lichtstrahlen, auftretende physikalische Erscheinung, welche bei flachem Auftreffen des Lichtes auf eine Grenzfläche zu einem anderen lichtdurchlässigen Medium auftritt, in dem die Ausbreitungsgeschwindigkeit des Lichts größer als im Ausgangsmedium ist. Wird der Einfallswinkel kontinuierlich variiert, tritt dieser Effekt bei einem bestimmten Wert des Einfallswinkels relativ plötzlich auf. Dieser spezifische Einfallswinkel wird als Grenzwinkel der Totalreflexion bezeichnet. Das Licht tritt nicht mehr größtenteils in das andere Medium über, sondern wird ab ab diesem Winkel (mehr oder weniger) total ins Ausgangsmedium zurückgeworfen (reflektiert). Somit kann das TIR-Prisma, also das optische Element, das sich aus den beiden laminierten Prismen **25** und **26** zusammensetzt, wie ein Spiegel verwendet werden. Wenn der Brechungsindex des TIR-Prismas **27** groß genug ist, erhält man die Totalreflexion (Total Internal Reflection, TIR) und das TIR-Prisma **27** wirkt wie ein Spiegel mit 100% Reflexion.

Als Kombination von zwei laminierten Prismen **25** und **26,** lenkt das TIR-Prisma **27** das einfallende Licht auf die DMD-Einheit **24** und das zu erzeugende Bild wird mit dem von DMD-Einheit **24** reflektierten Lichtstrahl projiziert. Die Verwendung eines TIR-Prismas **27** ermöglicht somit eine beachtliche Platzeinsparung, da derselbe Effekt nur mit einer sehr aufwendigen Spiegelkombination zu erreichen wäre. Außerdem wird so der durch das System erreichte Kontrast stark erhöht.

Die aus dem TIR-Prisma austrendende Strahlung verläuft weiter zu einer Projektions-Linse **22,** welche die parallelen Strahlen der Belichtungs-Strahlung **19** wieder so zu einem kegelförmigen Belichtungsbereich **20** aufsplittet. Zur Vereinfachung ist hier ein möglicher Belichtungsbereich **20** dargestellt, wobei jedoch die Belichtung ortsaufgelöst mit einem Fokusfleck von beispielsweise 0,5 mm x 0,5 mm erfolgen kann.

Die Strahlung des kegelförmigen Belichtungsbereich **20** wird anschließend zu einem semi-durchlässigen Spiegel **32** geleitet, einem sogenannten Teilerspiegel, welchen die Belichtungs-Strahlung **19** durchdringen kann. Im Anschluss trifft die Belichtungs-Strahlung **19** auf eine lichtdurchlässigen Folie **11** und belichtet zwischen dieser und dem bereits ausgehärteten Material **6** einen gewünschten Bereich. Die dabei entstehende Wärmestrahlung **13,** also die IR-Strahlung, wird von dem Material 6 emittiert und durch die lichtdurchlässige Folie **11** zurück zum semi-durchlässigen Spiegel 32 geleitet.

Der Spiegel **32** ist in einer vorteilhaften Ausgestaltung als Teilerspiegel, also so ausgebildet, dass die Wärmestrahlung **13,** also die IR-Strahlung, zur Wärmebildkamera **12** hin reflektiert wird, aber die Belichtungs-Strahlung **19,** beispielsweise UV-Strahlung, unverändert durch den Spiegel passieren kann.

Zur Vereinfachung ist ein kegelförmiger Belichtungsbereich **20** dargestellt. Es ist jedoch auch möglich, mittels mehrerer Lichtquellen, welche kleinere Bereiche bestrahlen, nur die gewünschten Bereiche (1 Pixel z.B. 20 x 20 µm) zwischen dem bereits ausgehärteten Material **6** und der lichtdurchlässigen Folie **11** - gegebenenfalls mit kleiner Flächenzu- oder abnahme - zu belichten.

In einer vorteilhaften Ausgestaltung können durch die DMD-Einheit **24** des Weiteren einzelne Pixel des Belichtungsbereichs je nach Vollständigkeit der Aushärtung an- oder ausgeschaltet werden. Dies erlaubt es, eine Überbelichtung bereits ausgehärteter Bereiche zu verhindern.

## Patentansprüche

1. Verfahren zur Prozessteuerung eines 3D-Druckprozesses mithilfe eines 3D-Druckers (2), welcher 3D-Drucker (2) eine Bauplattform (4), eine Lichtquelle (18), eine Aufnahmevorrichtung (10) für Druckmaterial (8) und eine Steuervorrichtung (14) aufweist, mit welcher ein Objekt aus den Druckmaterial (8) schichtweise oder kontinuierlich erzeugbar ist, **dadurch gekennzeichnet, dass** an den 3D-Drucker (2) eine Wärmebildkamera (12) angeschlossen ist, deren Ausgangssignal an die Steuervorrichtung (14) übertragen wird, und wobei das Verfahren die folgenden Schritte umfasst:
• Ortsselektives Belichten einer Schicht, oder von Teilen dieser Schicht
• Erfassung der Temperatur der Schicht während der Polymerisierung durch die Wärmebildkamera (12)
• Beenden des Bauprozesses einer Schicht durch Beenden der Belichtung, wobei der Zeitpunkt für das Ende der Belichtung durch das Erreichen einer vorher definierten Temperatur Tmax oder einer vorher definierten Temperaturänderung dT/dt festgelegt ist.

2. Verfahren nach Anspruch 1, **dadurch gekennzeichnet, dass** die vorher definierte Temperatur Tmax als die maximale Aufheiztemperatur, die an der Oberfläche der polymerisierenden Schicht durch die Wärmebildkamera (12) erfasst wird, festgelegt ist, wobei die Temperaturänderung dT/dt zu diesem Zeitpunkt gegen null konvergiert, insbesondere den Wert null annimmt.

3. Verfahren nach einem der vorhergehenden Ansprüche, **dadurch gekennzeichnet, dass** die Wärmestrahlung der Schicht durch eine Wärmebildkamera (12) erfasst wird, wobei die Temperaturänderung dT/dt der ersten Ableitung der Temperaturkurve entspricht, wobei eine positive Temperaturänderung dT/dt > 0 ein Aufheizen der Oberfläche, eine negative Temperaturänderung dT/dt < 0 ein Abkühlen der Oberfläche und keine Temperaturänderung dT/dt = 0 eine konstante Temperatur oder den Maximal-/Minimalwert einer Temperaturkurve Tmax oder Tmin angibt.

4. Verfahren nach einem der vorhergehenden Ansprüche, **dadurch gekennzeichnet, dass** die Temperaturänderung über die Folienoberfläche mittels der Wärmebildkamera (12) ortsaufgelöst erfasst und der Steuervorrichtung (14) zugeleitet wird.

5. Verfahren nach einem der vorhergehenden Ansprüche, **dadurch gekennzeichnet, dass** nach Beenden der Belichtung die Schicht von der Folie (11) gelöst und die Bauplattform (4) angehoben wird, wobei neues zu polymerisierendes Material in den entstandenen Spalt gelangt und wobei das Lösen des Objekts von der Folie (11) durch die Wärmebildkamera (12) als ein starker Abfall der Temperatur dT/dt << 0 erkannt wird.

6. Verfahren nach einem der vorhergehenden Ansprüche, **dadurch gekennzeichnet, dass** während der Belichtung die Bauplattform (4) kontinuierlich von mit einer definierten Geschwindigkeit, insbesondere 0,5 mm/min, angehoben wird, wobei neues zu polymerisierendes Material in den entstandenen Spalt gelangt, und dass eine Inhibitorschicht das Anhaften an der Folie (11) verhindert.

7. Verfahren nach einem der Ansprüche 1 bis 5, **dadurch gekennzeichnet, dass** die Bauplattform (4) zwischen den Belichtungszeiten stufenweise mit einer definierten Stufenhöhe angehoben wird, insbesondere um 0,3 bis 3 cm , und anschließend auf die gewünschte Schichtdicke abgesenkt wird, wobei neues zu polymerisierendes Material in den entstandenen Spalt gelangt und im nächsten Belichtungsschritt ausgehärtet wird.

8. Verfahren nach Anspruch 7, **dadurch gekennzeichnet, dass** die Bauplattform (4) zwischen den Belichtungszeiten schräg, insbesondere beginnend von einer Seite oder Ecke, bis zu einer Höhe von 1 cm angehoben wird und dass anschließend die Bauplattform (4) im wesentlichen horizontal ausgerichtet wird und diese anschließend auf die gewünschte Schichtdicke abgesenkt wird.

9. Verfahren nach einem der vorhergehenden Ansprüche, **dadurch gekennzeichnet, dass** der Materialfluss mit oder ohne Gasblasen zwischen der Bauplattform (4) und der Folie (11) durch die Wärmebildkamera (12) je als Temperaturveränderung dT/dt > 0 oder dT/dt < 0 erfasst und in der Steuervorrichtung (14) erkannt werden.

10. Verfahren nach einem der vorhergehenden Ansprüche, **dadurch gekennzeichnet, dass** Verunreinigungen auf der Folie (11) oder Inhibitorschicht - wie beispielsweise durch Sedimentation, Kontamination, Anhaften von Resten möglicher Fehlbau-Vorgänge oder Fremdpartikeln - durch die Wärmebildkamera (12) erfasst werden und in der Steuervorrichtung (14) aufgrund einer zu geringen erfassten Temperaturänderung, ggf. bei Bewegung der Bauplattform (4), erkannt werden.

11. Verfahren nach einem der vorhergehenden Ansprüche, **dadurch gekennzeichnet, dass** der Belichtungsprozess einer nächsten Schicht erst startet, wenn durch die Wärmebildkamera (12) registriert und in der Steuervorrichtung (14) erkannt wird, dass keine Gasblase/n oder keine Verunreinigungen - wie beispielsweise durch Sedimentation, Kontamination, Anhaften von Resten möglicher Fehlbau-Vorgänge oder Fremdpartikeln - auf der Folie (11) zurückgeblieben sind.

12. Verfahren nach einem der vorhergehenden Ansprüche, **dadurch gekennzeichnet, dass** der Belichtungsprozess der nächsten Schicht erst startet, wenn durch die Wärmebildkamera (12) registriert und durch die Steuervorrichtung (14) erkannt wird, dass nach einer Änderung der Temperatur, die einen vorgegebenen Schwellwert übersteigt, keine weitere Temperaturänderung messbar ist.

13. Verfahren nach einem der vorhergehenden Ansprüche, **dadurch gekennzeichnet, dass** von der Steuervorrichtung (14) ein Fehler- oder Warnsignal ausgegeben wird, wenn durch die Wärmebildkamera (12) registriert wird, dass die Temperaturverteilung nicht über die gesamte Folienoberfläche plausibel ist, insbesondere, da Gasblasen oder kleine Verunreinigungen auf der Folie (11) oder Inhibitorschicht, insbesondere zwischen dem Objekt und der Folie (11) oder Inhibitorschicht , zurückgeblieben sind.

14. Verfahren nach einem der vorhergehenden Ansprüche, **dadurch gekennzeichnet, dass** die Steuervorrichtung ein Fehler- oder Warnsignal ausgibt, wenn die Wärmebildkamera (12) registriert und die Steuervorrichtung (14) erfasst, dass sich die Wärme-Emissions bei Beginn der Belichtung nicht innerhalb einer vordefinierten Zeit, vorzugsweise etwa 2 Sekunden, ändert.

15. Verfahren nach einem der vorhergehenden Ansprüche, **dadurch gekennzeichnet, dass** der Belichtungsvorgang durch die Steuervorrichtung (14) verzögert, insbesondere pausiert, oder abgebrochen wird, wenn durch die Steuervorrichtung (14) ein Warnsignal ausgegeben wird und danach der Bauvorgang der nächsten Schichten angepasst oder der vorherige Belichtungsprozess wiederholt wird.

16. Verfahren nach einem der vorhergehenden Ansprüche, **dadurch gekennzeichnet, dass** die Abmessungen der je gedruckten Schicht während der Polymerisation mittels mehrdimensionaler, insbesondere 2-dimensionaler, ortsaufgelöster Temperaturmessung verfolgt werden, wobei die Abmessungen der belichteten Schicht mit den realen Abmessungen der vorhergehenden Schicht sowie den theoretischen Abmessungen des Objekts abgeglichen werden, wobei bei einer Größenabnahme der belichtete Bereich der nächsten Schicht verkleinert, bei einer Größenzunahme vergrößert wird.

17. 3D-Drucker (2) mit einer Bauplattform (4), einer Lichtquelle (18), eine Aufnahmevorrichtung (10) für Druckmaterial (8) und einer Steuervorrichtung (14), mit welcher ein Objekt aus dem Druckmaterial (8) schichtweise oder kontinuierlich erzeugbar ist, wobei an den 3D-Drucker (2) eine Wärmebildkamera (12) angeschlossen ist, deren Ausgangssignal an die Steuervorrichtung (14) übertragbar ist, wobei die Steuervorrichtung so konfiguriert ist, dass sie die folgenden Schritte ausführt:
• Belichten einer Schicht
• Erfassung der Temperatur der Schicht während der Polymerisierung durch die Wärmebildkamera (12)
• **dadurch gekennzeichnet, dass** der Bauprozesse einer Schicht durch Beenden der Belichtung beendet wird, wobei der genaue Zeitpunkt für das Ende der Belichtung durch das Erreichen einer vorher definierten Temperatur oder einer vorher definierten Temperaturänderung festgelegt ist.

## Claims

1. A process control method for a 3D-printing process using a 3D printer (2), said 3D printer (2) having a build platform (4), a light source (18), a receiving device (10) for printing material (8) and a control device (14) by means of which an item can be produced in layers or continuously from the printing material (8), **characterised in that** a thermal imaging camera (12), the output signal of which is transmitted to the control device (14), is connected to the 3D printer (2), and the method comprising the following steps:
• illuminating a layer or parts of said layer positionally selectively,
• detecting the temperature of the layer during the polymerisation using the thermal imaging camera (12),
• ending the building process of a layer by ending the illumination, the time for the end of the illumination being established by a predefined temperature Tₘₐₓ or a predefined change in temperature dT/dt being reached.

2. The method according to claim 1, **characterised in that** the predefined temperature Tₘₐₓ is defined as the maximum heating temperature detected at the surface of the polymerising layer by the thermal imaging camera (12), the change in temperature dT/dt at this time converging towards zero, in particular taking on a zero value.

3. The method according to any of the preceding claims, **characterised in that** the thermal radiation of the layer is detected by a thermal imaging camera (12), the change in temperature dT/dt corresponding to the first derivative of the temperature curve, a positive change in temperature dT/dt > 0 indicating heating of the surface, a negative change in temperature dT/dt < 0 indicating cooling of the surface, and no change in temperature dT/dt = 0 indicating a constant temperature or the maximum/minimum of a temperature curve Tₘₐₓ or Tₘᵢₙ.

4. The method according to any of the preceding claims, **characterised in that** the change in temperature over the film surface is detected in a spatially resolved manner by the thermal imaging camera (12) and passed to the control device (14).

5. The method according to any of the preceding claims, **characterised in that** after the illumination ends the layer is detached from the film (11) and the build platform (4) is raised, new material to be polymerised arriving in the resulting gap, and the detachment of the item from the film (11) being recognised by the thermal imaging camera (12) as a major drop in temperature dT/dt << 0.

6. The method according to any of the preceding claims, **characterised in that** during the illumination the build platform (4) is raised continuously at a defined speed, in particular 0.5 mm/min, new material to be polymerised arriving in the resulting gap, and **in that** an inhibitor layer prevents adhesion to the film (11).

7. The method according to any of claims 1 to 5, **characterised in that** the build platform (4) is raised incrementally between the illumination times with a defined step height, in particular around 0.3 to 3 cm, and subsequently lowered to the desired layer thickness, new material to be polymerised arriving in the resulting gap and being cured in the next illumination step.

8. The method according to claim 7, **characterised in that** the build platform (4) is raised diagonally, in particular starting from one side or edge, to a height of 1 cm between the illumination times, and **in that** the build platform (4) is subsequently aligned substantially horizontally and subsequently lowered to the desired layer thickness.

9. The method according to any of the preceding claims, **characterised in that** the material flow with or without gas bubbles between the build platform (4) and the film (11) is detected by the thermal imaging camera (12) as a change in temperature dT/dt > 0 or dT/dt < 0 in each case and recognised in the control device (14).

10. The method according to any of the preceding claims, **characterised in that** impurities on the film (11) or inhibitor layer
- for example due to sedimentation, contamination, adhesion of residues from any erroneous building process or of foreign particles
- can be detected by the thermal imaging camera (12) and are recognised in the control device (14) on the basis of an excessively low detected change in temperature, optionally during movement of the build platform (4).

11. The method according to any of the preceding claims, **characterised in that** the illumination process of a next layer only starts when the thermal imaging camera (12) records and the control device (14) recognises that no gas bubble(s) or no impurities - for example due to sedimentation, contamination, adhesion of residues from any erroneous building process or of foreign particles - have been left behind on the film (11).

12. The method according to any of the preceding claims, **characterised in that** the illumination process of the next layer only starts when the thermal imaging camera (12) records and the control device (14) recognises that after a change in temperature exceeding a predetermined threshold no further change in temperature is measurable.

13. The method according to any of the preceding claims, **characterised in that** the control device (14) outputs an error signal or warning signal when the thermal imaging camera (12) records that the temperature distribution is not plausible over the entire film surface, in particular because gas bubbles or small impurities have been left behind on the film (11) or inhibitor layer, in particular between the item and the film (11) or inhibitor layer.

14. The method according to any of the preceding claims, **characterised in that** the control device outputs an error signal or warning signal when the thermal imaging camera (12) records and the control device (14) detects that the thermal emission does not change within a predefined time, preferably approximately 2 seconds, at the start of the illumination.

15. The method according to any of the preceding claims, **characterised in that** the illumination process is delayed, in particular paused, or aborted by the control device (14) if the control device (14) outputs a warning signal and subsequently the building process of the next layers is adapted or the previous illumination process is repeated.

16. The method according to any of the preceding claims, **characterised in that** the dimensions of each printed layer are tracked during polymerisation using multi-dimensional, in particular 2-dimensional, spatially resolved temperature measurement, the dimensions of the illuminated layer being compared against the real dimensions of the preceding layer and against the theoretical dimensions of the item, the next layer being reduced if the size of the illuminated area decreases and enlarged if it increases.

17. A 3D printer (2) comprising a build platform (4), a light source (18), a receiving device (10) for printing material (8) and a control device (14) by means of which an item can be produced in layers or continuously from the printing material (8), wherein a thermal imaging camera (12), the output signal of which can be transmitted to the control device (14), is connected to the 3D printer (2), wherein the control device is configured to carry out the following steps:
• illuminating a layer,
• detecting the temperature of the layer during the polymerisation using the thermal imaging camera (12),
• **characterised in that** the building process of a layer is ended by ending the illumination, the exact time for the end of the illumination being established by a predefined temperature or a predefined change in temperature being reached.

## Revendications

1. Procédé de commande de processus d'un procédé d'impression 3D au moyen d'une imprimante 3D (2), laquelle imprimante 3D (2) présente une plateforme de construction (4), une source de lumière (18), un dispositif de réception (10) pour un matériau d'impression (8) et un dispositif de commande (14) avec lequel un objet peut être produit à partir du matériau d'impression (8) en couches ou en continu, **caractérisé en ce qu'**une caméra thermique (12) est connectée à l'imprimante 3D (2), dont le signal de sortie est transmis au dispositif de commande (14) et où la procédure comprend les étapes suivantes :
• exposition locale sélective d'une couche, ou de parties de cette couche
• détection de la température de la couche lors de la polymérisation par la caméra thermique (12)
• terminaison du processus de construction d'une couche en mettant fin à l'exposition, où le moment pour la fin de l'exposition est déterminé en atteignant une température Tmax définie au préalable ou une modification de température dT/dt définie au préalable.

2. Procédé selon la revendication 1, **caractérisé en ce que** la température Tmax définie au préalable est fixée comme la température maximale de chauffage détectée à la surface de la couche polymérisante par la caméra thermique (12), où la variation de température dT/dt converge vers zéro à ce moment, en particulier prend la valeur zéro.

3. Procédé selon l'une des revendications précédentes, **caractérisé en ce que** le rayonnement thermique de la couche est détecté par une caméra thermique (12), où le changement de température dT/dt correspond à la dérivée première de la courbe de température, où un changement de température positif dT/dt > 0 indique un échauffement de la surface, un changement de température négatif dT/dt < 0 indique un refroidissement de la surface et aucun changement de température dT/dt = 0 indique une température constante ou la valeur maximale/minimale d'une courbe de température Tmax ou Tmin.

4. Procédé selon l'une des revendications précédentes, **caractérisé en ce que** la variation de température sur la surface du film est enregistrée dans l'espace, résolue spatialement au moyen de la caméra thermique (12) et transmise au dispositif de commande (14) .

5. Procédé selon l'une des revendications précédentes, **caractérisé en ce qu'**après la fin de l'exposition, la couche est détachée du film (11) et la plate-forme de construction (4) est soulevée, où du nouveau matériau à polymériser pénètre dans la fente créée et où le détachement de l'objet du film (11) est détecté par la caméra thermique (12) comme une forte baisse de température dT/dt << 0.

6. Procédé selon l'une des revendications précédentes, **caractérisé en ce que**, pendant l'exposition, la plate-forme de construction (4) est soulevée en continu à une vitesse définie, en particulier 0,5 ram/min, où du nouveau matériau à polymériser parvient dans la fente créée et **en ce qu'**une couche inhibitrice empêche l'adhérence au film (11).

7. Procédé selon l'une des revendications 1 à 5, **caractérisé en ce que** la plate-forme de construction (4) est soulevée par étapes entre les temps d'exposition avec une hauteur d'étape définie, en particulier de 0,3 à 3 cm, et est ensuite abaissée à l'épaisseur de couche souhaitée, où du nouveau matériau à polymériser parvient dans la fente créée et est durci lors de l'étape d'exposition suivante.

8. Procédé selon la revendication 7, **caractérisé en ce que** la plate-forme de construction (4) est soulevée obliquement entre les temps d'exposition, en particulier en partant d'un côté ou d'un coin, jusqu'à une hauteur de 1 cm et **en ce que** la plateforme de construction (4) est ensuite orientée essentiellement horizontalement et celle-ci est ensuite abaissée à l'épaisseur de couche souhaitée.

9. Procédé selon l'une des revendications précédentes, **caractérisé en ce que** le flux de matériau avec ou sans bulles de gaz entre la plateforme de construction (4) et le film (11) est détecté par la caméra thermique (12) comme un changement de température dT/dt > 0 ou dT/dt < 0 respectivement et reconnu dans le dispositif de commande (14).

10. Procédé selon l'une des revendications précédentes, **caractérisé en ce que** les impuretés sur le film (11) ou la couche inhibitrice - comme par exemple par la sédimentation, la contamination, l'adhérence de résidus d'éventuels procédés de construction défectueux ou de particules étrangères - sont détectées par la caméra thermique (12) et sont détectées dans le dispositif de commande (14) en raison d'une variation de température détecté trop faible, le cas échéant lors du déplacement de la plateforme de construction (4).

11. Procédé selon l'une des revendications précédentes, **caractérisé en ce que** le processus d'exposition d'une couche suivante ne commence pas tant qu'il n'est pas enregistré par la caméra thermique (12) et détecté par le dispositif de commande (14) qu'aucune bulle de gaz ou impureté - comme par exemple par la sédimentation, la contamination, l'adhérence de résidus d'éventuels procédés de construction défectueux ou de particules étrangères - n'est restée sur le film (11).

12. Procédé selon l'une des revendications précédentes, **caractérisé en ce que** le processus d'exposition de la couche suivante ne commence pas tant qu'il n'est pas enregistré par la caméra thermique (12) et détecté par le dispositif de commande (14) qu'aucun changement de température supplémentaire n'est mesurable après un changement de température au-delà d'une valeur seuil spécifiée.

13. Procédé selon l'une des revendications précédentes, **caractérisé en ce qu'**un signal d'erreur ou d'avertissement est émis par le dispositif de commande (14) lorsqu'il est enregistré par la caméra thermique (12) que la distribution de température n'est pas possible sur toute la surface du film, en particulier parce que des bulles de gaz ou de petites impuretés sont restées sur le film (11) ou la couche inhibitrice, en particulier entre l'objet et le film (11) ou la couche inhibitrice.

14. Procédé selon l'une des revendications précédentes, **caractérisé en ce que** le dispositif de commande émet un signal d'erreur ou d'avertissement lorsque la caméra thermique (12) enregistre et que le dispositif de commande (14) détecte que les émissions de chaleur ne changent pas dans un temps prédéfini, de préférence environ 2 secondes, au début de l'exposition.

15. Procédé selon l'une des revendications précédentes, **caractérisé en ce que** le processus d'exposition est retardé, en particulier mis en pause ou interrompu par le dispositif de commande (14) si un signal d'avertissement est émis par le dispositif de commande (14) et que le processus de construction des couches suivantes est ensuite adapté ou que le processus d'exposition précédent est répété.

16. Procédé selon l'une des revendications précédentes, **caractérisé en ce que** les dimensions de la couche imprimée sont tracées au cours de la polymérisation au moyen d'une mesure de température multidimensionnelle, en particulier en 2 dimensions, à résolution spatiale,, où les dimensions de la couche exposée sont comparées aux dimensions réelles de la couche précédente ainsi qu'aux dimensions théoriques de l'objet, où la zone exposée de la couche suivante est réduite en cas de diminution de taille, et augmentée en cas d'augmentation de taille.

17. Imprimante 3D (2) qui présente une plateforme de construction (4), une source de lumière (18), un dispositif de réception (10) pour un matériau d'impression (8) et un dispositif de commande (14) avec lequel un objet peut être produit en couches ou en continu à partir du matériau d'impression (8), où une caméra thermique (12) est connectée à l'imprimante 3D (2), dont le signal de sortie peut être transmis au dispositif de commande (14), où le dispositif de commande est configuré de telle manière à effectuer les étapes suivantes :
• exposition d'une couche à la lumière
• détection de la température de la couche lors de la polymérisation par la caméra thermique (12)
**caractérisé en ce que** le processus de construction d'une couche est terminé en mettant fin à l'exposition, où le moment exact de la fin de l'exposition est déterminé par l'atteinte d'une température ou la modification d'une température modifiée définies au préalable.
